# EUROPEAN PATENT APPLICATION

(11) **EP 4 407 758 A1**
(43) Date of publication of application: **31.07.2024**
(21) Application number: 21962027.5
(22) Date of filing: 01.11.2021
(51) Int. Cl.: H01M 50/103, H01M 50/533, H01M 50/528

(54) **BATTERY CELL, BATTERY, ELECTRICAL DEVICE, AND METHOD AND DEVICE FOR MANUFACTURING BATTERY CELL**

(71) Applicant: Contemporary Amperex Technology Co., Limited, Jiaocheng District Ningde Fujian 352100 (CN)
(72) Inventor: XU, Hu, Ningde, Fujian 352100 (CN); NIU, Shaojun, Ningde, Fujian 352100 (CN); LI, Xing, Ningde, Fujian 352100 (CN)
(74) Representative: Holt, Lucy Rose
(86) International application number: PCT/CN2021/127992
(87) International publication number: WO 2023/070677

(57) **Abstract**

Provided in the embodiments of the present application are a battery cell, a battery, an electrical device, and a method and device for manufacturing a battery cell. The battery cell comprises: a shell, which has an accommodating cavity and an opening at one end, and has a first wall, wherein the first wall is adjacent to the opening; an electrode terminal, which is arranged on the first wall; an electrode assembly, which is accommodated in the accommodating cavity and is provided with a tab; and a connecting component, which is used for electrically connecting the electrode terminal and the tab, and comprises a first part and a second part that bend relative to each other, wherein the first part is used for being electrically connected to the electrode terminal, the second part is used for being electrically connected to the tab, and the tab is located between the second part and the opening or the second part is located between the tab and the opening. By means of the battery cell, the battery, the electrical device, and the method and device for manufacturing a battery cell, which are provided in the embodiments of the present application, the assembly efficiency of a battery cell can be improved.

## Description

### TECHNICAL FIELD

The present application relates to the field of battery technologies, and in particular, to a battery cell, a battery, a power consumption device, and a method and device for producing a battery cell.

### BACKGROUND

Energy saving and emission reduction are key to the sustainable development of the automobile industry. In this case, electric vehicles have become an important part of the sustainable development of the automobile industry due to their advantages of energy saving and environmental protection. For electric vehicles, battery technology is an important factor for their development.

With the development of battery technology, how to improve the production and processing efficiency of a battery has become a particularly important issue in the development of battery technology.

### SUMMARY

The present application provides a battery cell, a battery, a power consumption device, and a method and device for producing a battery cell, which could improve assembly efficiency of the battery cell.

In a first aspect, a battery cell is provided, including a housing, where the housing has an accommodating cavity and an opening at one end, the housing has a first wall, and the first wall is adjacent to the opening; an electrode terminal, disposed on the first wall; an electrode assembly, accommodated in the accommodating cavity and having a tab; and a connecting component, where the connecting component is configured to electrically connect the electrode terminal and the tab, the connecting component includes a first portion and a second portion that are relatively bent, the first portion is configured to be electrically connected to the electrode terminal, the second portion is configured to be electrically connected to the tab, and the tab is located between the second portion and the opening or the second portion is located between the tab and the opening.

Therefore, in a battery cell of an embodiment of the present application, an electrode assembly and a connecting component at the interior may be assembled in a housing through an opening of the housing, an electrical connection of an electrode terminal, the connecting component, and a tab may also be implemented at the opening, so that assembly of various components of the battery cell may be completed in one process, and finally the opening of the housing is covered to complete the packaging process of the battery cell, which simplifies a processing process, improves assembly efficiency of the battery cell. Thus, the assembly efficiency of the battery is improved.

In some embodiments, the first portion and the second portion are perpendicular to each other.

The first portion and the second portion that are perpendicular to each other make the processing easier. Furthermore, in a case where the tab and a surface of the electrode terminal facing the electrode assembly are perpendicular to each other, an electrical connection between the tab and the electrode terminal can be implemented without bending the tab.

In some embodiments, the first portion is parallel to the first wall; and/or the second portion is perpendicular to the first wall.

A surface of the electrode terminal facing the interior of the battery cell is generally parallel to a surface of the first wall facing the electrode assembly at the interior of the battery cell. Correspondingly, the first portion is set to be parallel to the first wall, that is, the first portion is set to be parallel to the surface of the electrode terminal facing the electrode assembly at the interior of the battery cell, so as to implement an electrical connection between the first portion and the electrode terminal.

In addition, in the case where the tab and the surface of the electrode terminal facing the electrode assembly are perpendicular to each other, the second portion is set to be perpendicular to the first wall, and thus the tab does not need to be bent, to implement an electrical connection between the second portion and the tab.

In some embodiments, the tab is disposed on a side of the electrode assembly close to the first wall.

The electrode terminal is disposed on the first wall, and the tab is electrically connected to the electrode terminal through the connecting component. Therefore, the tab may be disposed on a side of the electrode assembly close to the first wall, so that the tab does not need to be bent too much, thereby implementing an electrical connection between the tab and the electrode terminal on the first wall through the connecting component.

In some embodiments, the battery cell further includes: a support structure, where a first end of the support structure abuts against a second wall of the housing, and the second wall is connected with the first wall and opposite to the opening, and a second end of the support structure abuts against the second portion.

Two ends of the support structure respectively abut against the second wall and the second portion, so that the second portion may be supported, to implement the electrical connection between the second portion and the tab, and the second portion and the tab may also be relatively fixed in a direction perpendicular to the second wall, thereby improving stability of the battery cell.

In some embodiments, the second end abuts against a junction of the second portion and the tab, so that an area of the support structure abutting against the second part is relatively large, and the junction of the second portion and the tab can be supported more stably, so as to implement the electrical connection between the second portion and the tab, and better improve the stability of the battery cell.

In some embodiments, at least part of a third end of the support structure abuts against the first portion to support the first portion, and the third end is connected to the first end and the second end.

In addition, considering that the first portion and the second portion of the connecting component are relatively bent, at least part of the third end abuts against the first portion, that is, at least part of the support structure is disposed in a bending region of the first portion and the second portion, which may support the first portion, and also the stability and strength of the connecting component may be improved, so that first portion and the second portion are not prone to deformation.

In some embodiments, the battery cell further includes: an insulation component, where at least part of the insulation component is located between the electrode terminal and the first wall, so as to isolate the electrode terminal from the first wall.

In some embodiments, the insulation component includes a protrusion extending toward the electrode assembly, and the first end abuts against the second wall through the protrusion. The setting of the protrusion facilitates the assembly of other components in the battery cell. For example, the electrode assembly needs to be wrapped with an insulating film so as to be insulated from the housing, and the protrusion may facilitate fixing of the insulating film on the insulation component, so as to improve the stability of each component at the interior of the battery cell.

In some embodiments, at least part of the support structure is clamped between the electrode terminal and the protrusion, so as to fill the space between the electrode terminal and the protrusion, and improve the stability of each component at the interior of the battery cell.

In some embodiments, the battery cell further includes: an end cover, the end cover being configured to cover the opening, and the end cover being a wall of the battery cell with the largest area.

The end cover is a wall of the battery cell with the largest area. Correspondingly, an area of the opening of the housing is equal to an area of the wall of the battery cell with the largest area, so that the opening may reach the maximum value, thereby facilitating the processing and assembly of various components at the interior of the battery cell through the opening and increasing the assembly speed.

In some embodiments, the first wall is a wall of the battery cell other than the wall with the largest area. Considering that the wall of the battery cell with the largest area, during charging and discharging of the battery cell, has a larger deformation amount and generates more heat than other walls with smaller areas, therefore, the electrode terminal is generally not disposed on the wall with the largest area, so as to avoid damage to the electrode terminal.

In some embodiments, the electrode terminal and the connecting component are an integrally formed structure. This can facilitate processing and improve the assembly efficiency of the battery cell.

In a second aspect, a battery is provided, including: the battery cell in the first aspect; and a box configured to accommodate a plurality of the battery cells.

In a third aspect, a power consumption device is provided, including: the battery cell in the first aspect, the battery cell being configured to provide electric energy for the power consumption device.

In some embodiments, the power consumption device is a vehicle, ship or spacecraft.

In a fourth aspect, a method for producing a battery cell is provided, including: accommodating an electrode assembly in an accommodating cavity of a housing, where the housing has an opening at one end, the housing has a first wall, and the first wall is adjacent to the opening; an electrode terminal is disposed on the first wall; and an electrode assembly has a tab; and electrically connecting the electrode terminal and the tab through a connecting component, where the connecting component includes a first portion and a second portion that are relatively bent, the first portion is configured to be electrically connected to the electrode terminal, the second portion is configured to be electrically connected to the tab, and the tab is located between the second portion and the opening or the second portion is located between the tab and the opening.

In a fifth aspect, a device for producing a battery cell is provided, including a module configured to perform the method in the foregoing fourth aspect.

### BRIEF DESCRIPTION OF THE DRAWINGS

FIG. 1 is a schematic structural diagram of a vehicle disclosed in an embodiment of the present application;
FIG. 2 is a schematic diagram of an exploded structure of a battery disclosed in an embodiment of the present application;
FIG. 3 is a schematic cross-sectional view of an exploded structure of a battery cell disclosed in an embodiment of the present application;
FIG. 4 is a schematic partial cross-sectional view of an assembled battery cell disclosed in an embodiment of the present application;
FIG. 5 is a schematic partial cross-sectional view of an exploded structure of another battery cell disclosed in an embodiment of the present application;
FIG. 6 is a schematic cross-sectional view of an exploded structure of a support structure, a tab, and an electrode terminal disclosed in an embodiment of the present application;
FIG. 7 is a schematic partial cross-sectional view of an exploded structure of yet another battery cell disclosed in an embodiment of the present application;
FIG. 8 is a schematic partial cross-sectional view of an exploded structure of still another battery cell disclosed in an embodiment of the present application;
FIG. 9 is a schematic partial cross-sectional view of another assembled battery cell disclosed in an embodiment of the present application;
FIG. 10 is a schematic flowchart of a method for producing a battery cell disclosed in an embodiment of the present application; and
FIG. 11 is a schematic block diagram of a device for producing a battery cell disclosed in an embodiment of the present application.

In accompanying drawings, the accompanying drawings are not drawn to actual scale.

### DESCRIPTION OF EMBODIMENTS

Embodiments of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that unless otherwise stated, the meaning of "a plurality of" means two or more, orientations or positional relationships indicated by terms such as "up", "down", "left", "right", "inside" and "outside" are merely for convenience of describing the present application and for simplifying the description, but not for indicating or implying that an indicated apparatus or element must have a specific orientation and/or must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within the allowable range of error. "Parallel" is not strictly parallel, but within an allowable range of error.

The terms representing directions in the following description are all directions shown in the drawings, which is not for limiting the specific structure of the present application. In the description of the present application, it should be noted that unless otherwise explicitly specified and limited, the terms "installation", "interconnection" and "connection" should be understood in a broad sense, for example, they may either be a fixed connection, a detachable connection, or an integrated connection; and they may either be a direct connection or an indirect connection through an intermediate medium. Those of ordinary skill in the art may understand the specific meanings of the foregoing terms in the present application according to a specific situation.

In the embodiments of the present application, the same reference signs represent the same components, and for the sake of brevity, detailed descriptions of the same components are omitted in different embodiments. It should be understood that a thickness, length, width and other dimensions of the various components in the embodiments of the present application shown in the drawings, as well as the overall thickness, length and width of the integrated device are for illustrative purposes only, and should not constitute any limitation to the present application.

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. The battery cells may be cylindrical, flat, cuboid or in another shape, which is not limited by the embodiments of the present application. The battery cells are generally divided into three types according to the way of packaging: cylindrical battery cells, prismatic battery cells and pouch battery cells, which are not limited by the embodiments of the present application.

The battery mentioned in the embodiments of the present application refers to a single physical module including one or more battery cells to provide a higher voltage and capacity. For example, the battery mentioned in the present application may include a battery module or a battery pack, or the like. The battery generally includes a box for enclosing one or more battery cells. The box can prevent liquid or other foreign matters from affecting the charging or discharging of the battery cell.

The battery cell includes an electrode assembly and an electrolyte, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive active material layer. The positive active material layer is coated on a surface of the positive electrode current collector, and the positive electrode current collector not coated with the positive active material layer protrudes from the positive electrode current collector coated with the positive active material layer and is used as a positive tab. A lithium-ion battery is taken as an example, the material of the positive electrode current collector may be aluminum, and the positive electrode active material may be lithium cobalt oxides, lithium iron phosphate, ternary lithium or lithium manganate, or the like. The negative electrode sheet includes a negative electrode current collector and a negative active material layer. The negative active material layer is coated on a surface of the negative electrode current collector, and the negative electrode current collector not coated with the negative active material layer protrudes from the negative electrode current collector coated with the negative active material layer and is used as a negative tab. The material of the negative electrode current collector may be copper, and the negative electrode active material may be carbon or silicon, or the like. In order to ensure that a large current is passed without fusing, positive tabs are multiple in number and stacked together, and negative tabs are multiple in number and stacked together. A material of the separator may be polypropylene (polypropylene, PP), polyethylene (polyethylene, PE), or the like. In addition, the electrode assembly may be a winding structure or a laminated structure, and the embodiments of the present application are not limited thereto.

With the development of the battery technology, it is necessary to consider many design factors, such as energy density, cycle life, discharge capacity, C-rate and other performance parameters. In addition, the production cost and production efficiency of the battery also need to be considered.

When a battery cell is processed and assembled, taking a cuboid battery cell as an example, the battery cell is generally set to include a housing and an end cover. The housing is a hollow structure with an opening at one end, and the hollow structure is configured to accommodate an electrode assembly. A side of the electrode assembly facing the opening of the housing is provided with a tab, and the end cover is generally a wall of the battery cell with the smallest area. An electrode terminal is disposed on the end cover, and the electrode terminal is electrically connected to the tab of the electrode assembly through a connecting component. The connecting component is generally sheet-shaped, and the connecting component is disposed in parallel to the end cover, and a portion of the tab connected to the connecting component is also disposed in parallel to the end cover. In this way, an electrical connection of the tab, the connecting component, and the end cover is implemented, and the end cover covers the opening of the housing.

However, in the foregoing processing and assembly manner, the electrode terminal is provided on the end cover that is disposed independent of the housing, the components such as the electrode terminal need to be processed on the end cover, and the electrode assembly at the interior of the housing needs to be electrically connected to the connecting component, the connecting component is also electrically connected to the electrode terminal disposed on the end cover, and the end cover covers the housing. The whole processing process is cumbersome and complicated, and therefore, the assembly efficiency of the battery cell is reduced and the assembly efficiency of the battery is affected.

Therefore, according to an embodiment of the present application, a battery cell is provided, the battery cell includes a housing and an end cover, the housing is a hollow structure with an opening at one end, and an electrode terminal is provided on a first wall of the housing that is adjacent to the opening, and a connecting component includes a first portion and a second portion that are bent relatively. The first portion is configured to be electrically connected to the electrode terminal, and the second portion is configured to be electrically connected to the tab of the electrode assembly, and the second portion is located between the tab and the opening of the housing or the second portion is located between the tab and the opening. In this way, the electrode assembly and the connecting component at the interior may be assembled in the housing through the opening of the housing, the electrical connection of the electrode terminal, the connecting component, and the tab may also be implemented at the opening, so that assembly of various components of the battery cell may be completed in one process, and finally the opening of the housing is covered through the end cover that is independently disposed to complete the packaging process of the battery cell, which simplifies the processing process, improves assembly efficiency of the battery cell. Thus, the assembly efficiency of the battery is improved.

The technical solutions described in the embodiments of the present application are all applicable to various power consumption devices using batteries.

The power consumption device may be a vehicle, a mobile phone, a portable device, a notebook computer, a ship, a spacecraft, an electric toy, an electric tool, or the like. The vehicle may be a fuel-powered vehicle, a gas-powered vehicle or a new energy vehicle, and the new energy vehicle may be a battery electric vehicle, a hybrid vehicle, an extended-range vehicle, or the like. The spacecraft includes an airplane, a rocket, a space shuttle, a spaceship, or the like. The electric toy includes a fixed or movable electric toy, such as a game console, an electric vehicle toy, an electric ship toy, and an electric airplane toy. The electric tool includes an electric metal cutting tool, an electric grinding tool, an electric assembling tool, and an electric railway tool, such as an electric drill, an electric grinder, an electric spanner, an electric screwdriver, an electric hammer, an electric impact drill, a concrete vibrator, and an electric planer. The embodiment of the present application does not make special limitations on the foregoing power consumption device.

For the convenience of description, the following embodiments will be described by taking a power consumption device as a vehicle as an example.

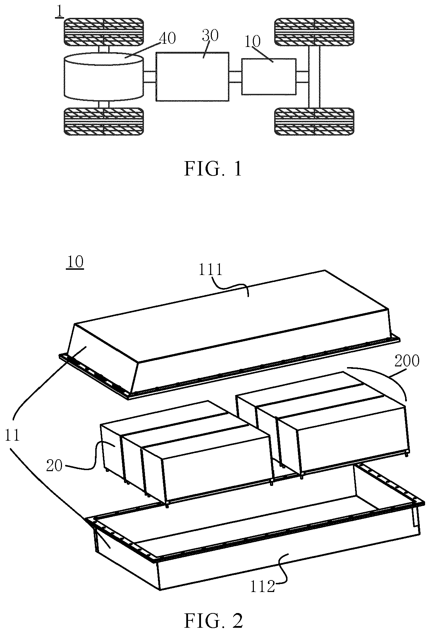

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 40, a controller 30 and a battery 10 may be disposed inside the vehicle 1, and the controller 30 is configured to control the battery 10 to supply power to the motor 40. For example, the battery 10 may be disposed at the bottom, head or tail of the vehicle 1. The battery 10 may be used for supplying power to the vehicle 1. For example, the battery 100 may serve as an operation power supply of the vehicle 1, and is used for a circuit system of the vehicle 1, for example, for a working power demand of the vehicle 1 during startup, navigation, and running. In another embodiment of the present application, the battery 10 can not only serve as an operation power supply of the vehicle 1, but also as a driving power supply of the vehicle 1, replacing or partially replacing fuel or natural gas to provide driving power for the vehicle 1.

In order to meet different power requirements, the battery may include a plurality of battery cells. The plurality of battery cells may be in series connection, parallel connection or series-parallel connection. The series-parallel connection refers to a combination of series connection and parallel connection. The battery may also be referred to as a battery pack. In some embodiments, the plurality of battery cells may be first connected in series, in parallel or in series-parallel to form a battery module, and then a plurality of battery modules are connected in series or in parallel or in series-parallel to form a battery. That is, the plurality of battery cells may form the battery directly, or form a battery module first, and then battery modules form the battery.

For example, FIG. 2 is a schematic structural diagram of a battery 10 according to an embodiment of the present application. The battery 10 may include at least one battery module 200. The battery module 200 includes a plurality of battery cells 20. The battery 10 may further include a box 11, an interior of the box 11 is a hollow structure, and the plurality of battery cells 20 are accommodated in the box 11. FIG. 2 shows a possible implementation of the box 11 of the embodiment of the present application. As shown in FIG. 2, the box 11 may include two portions, which are herein referred to as a first box portion 111 and a second box portion 112, and the first box portion 111 and the second box portion 112 cover each other. The shapes of the first box portion 111 and the second box portion 112 may be determined according to the combined shape of the battery modules 200, and at least one of the first box portion 111 and the second box portion 112 has an opening. For example, as shown in FIG. 2, the first box portion 111 and the second box portion 112 each may be a hollow cuboid and each has only one surface as an opening face, an opening of the first box portion 111 is arranged opposite to an opening of the second box portion 112, and the first box portion 111 and the second box portion 112 are fastened to each other to form the box 11 with a closed cavity.

For another example, different from what is shown in FIG. 2, only one of the first box portion 111 and the second box portion 112 may be a hollow cuboid with an opening, while the other may be in a plate shape to cover the opening. For example, here, description is made by an example that the second box portion 112 is a hollow cuboid and only one face serves as an opening face, while the first box portion 111 is in a plate shape. Therefore, the first box portion 111 covers the opening of the second box portion 112 to form the box 11 with a closed cavity, which can be used to accommodate the plurality of battery cells 20. The plurality of battery cells 20 are combined in parallel, in series or in series-parallel and then placed in the box 11 formed by fastening the first box portion 111 and the second box portion 112.

In some embodiments, the battery 10 may also include other structures, which will not be repeated here. For example, the battery 10 may further include a bus component, which is configured to realize electrical connection between the plurality of battery cells 20, such as parallel connection, series connection or series-parallel connection. Specifically, the bus component can realize the electrical connection between the battery cells 20 by connecting electrode terminals of the battery cells 20. Further, the bus component may be fixed to the electrode terminals of the battery cell 20 by welding. Electric energy of the plurality of battery cells 20 can be further drawn out by a conductive mechanism passing through the box 11.

According to different power requirements, the number of battery cells 20 in the battery module 200 may be set to any value. The plurality of battery cells 20 may be connected in series, in parallel or in series-parallel to implement larger capacity or power. Since there may be many battery cells 20 included in each battery 10, the battery cells 20 may be arranged in groups for convenience of installation, and each group of battery cells 20 constitutes a battery module 200. The number of battery cells 20 included in the battery module 200 is not limited and may be set as required. The battery may include a plurality of battery modules 200, and these battery modules 200 may be connected in series, in parallel or in series-parallel.

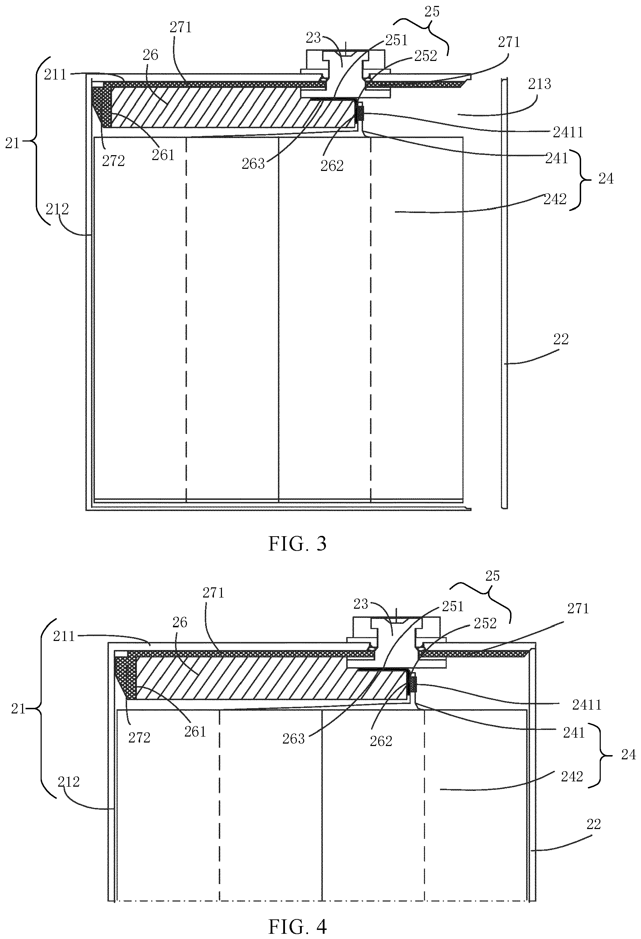

FIG. 3 shows a schematic cross-sectional view of an exploded structure of a battery cell 20 according to an embodiment of the present application, and FIG. 4 shows a schematic partial cross-sectional view of a battery cell 20 assembled corresponding to FIG. 3. As shown in FIG. 3 and FIG. 4, the battery cell 20 of the embodiment of the present application includes: a housing 21, where the housing 21 has an accommodating cavity and an opening 213 at one end, the housing 21 has a first wall 211, and the first wall 211 is adjacent to the opening 213; an electrode terminal 23, disposed on the first wall 211; an electrode assembly 24, accommodated in the accommodating cavity and having a tab 241; and a connecting component 25, where the connecting component 25 is configured to electrically connect the electrode terminal 23 and the tab 241, the connecting component 25 includes a first portion 251 and a second portion 252 that are relatively bent, the first portion 251 is configured to be electrically connected to the electrode terminal 23, the second portion 252 is configured to be electrically connected to the tab 241, and the tab 241 is located between the second portion 252 and the opening 213 or the second portion 252 is located between the tab 241 and the opening 213.

It should be understood that the housing 21 of the embodiment of the present application is a hollow structure with an opening 213, and therefore, the housing 21 has a plurality of side walls surrounding the opening 213, that is, the plurality of side walls are all adjacent to the opening. The first wall 211 provided with the electrode terminal 23 may be any one of the plurality of side walls.

The connecting component 25 of the embodiment of the present application includes a first portion 251 and a second portion 252 that are bent relatively, that is, the first portion 251 and the second portion 252 intersect, and an included angle is formed between the first portion 251 and the second portion 252.

Therefore, the battery cell 20 of the embodiment of the present application is electrically connected to the electrode terminal 23 through the first portion 251 of the connecting component 25, and is electrically connected to the tab 241 of the electrode assembly 24 through the second portion 252. The first portion 251 and the second portion 252 are relatively bent, and the tab 241 is located between the second portion 252 and the opening 213 of the housing 21 or the second portion 252 is located between the tab 241 and the opening 213 of the housing 21. In this way, the electrode assembly 24 and the connecting component 25 at the interior may be assembled in the housing 21 through the opening 213 of the housing 21, the electrical connection between the electrode terminal 23 on the first wall 211, the connecting component 25 and the tab 241 at the interior of the battery cell 20 may also be implemented at the opening 213, so that assembly of various components of the battery cell 20 may be completed in one process, and finally the packaging process of the battery cell 20 is completed only by covering the opening 213 of the housing 21, which simplifies the assembly process, improves assembly efficiency of the battery cell 20. Thus, the assembly efficiency of the battery 10 is improved.

The housing 211 of the embodiment of the present application is a component configured to accommodate the electrode assembly 24. The housing 211 may be a hollow structure with an opening 213 at least at one end. Correspondingly, the battery cell 20 may further include an end cover 22 configured to cover the opening 213 to form a closed battery cell 20. It can be understood that after assembly, the tab 241 is located between the second portion 252 and the end cover 22 or the second portion 252 is located between the tab 241 and the end cover 22. If the housing 21 is a hollow structure with an opening 213 at one end, the number of end covers 22 may be set to 1; and if the housing 21 is a hollow structure with openings 213 at two opposite ends, the number of end covers 22 may be set to 2, and the two end covers 22 respectively cover the openings 213 at the two ends of the housing 21. The housing 21 may be made of various materials, such as copper, iron, aluminum, steel, aluminum alloy, or the like. The housing 21 may be in various shapes, such as a cylinder or cuboid. Exemplarily, in each of the drawings of the embodiments of the present application, the housing 21 is a cuboid, and the housing 21 is a hollow structure with an opening 213 at one end. For example, as shown in FIG. 3, before assembly, the housing 21 is a hollow structure with an opening 213 at one end, the housing 21 has a bottom wall 212 opposite to the opening, the housing 21 further has a plurality of side walls disposed around the opening 213, and the electrode terminal 23 is disposed on a first wall 211 of the plurality of side walls.

The end cover 22 of the embodiment of the present application is a component that covers the opening 213 of the housing 21 to isolate the internal environment of the battery cell 20 from the external environment. The end cover 22 may also be made of various materials, such as copper, iron, aluminum, steel, aluminum alloy, or the like, and the material of the end cover 22 may be the same as or different from the material of the housing 21. The shape of the end cover 22 may be adapted to the shape of the housing 21. For example, when the housing 21 is a cuboid structure, the end cover 22 may be a plate-shaped structure that is adapted to the housing 21 or may also be a hollow cuboid structure with an opening 213 at one end, so that the end cover 22 can cover the housing 21 to form a cuboid battery cell 20 when an opening of the end cover 22 and an opening 213 of the housing 21 are oppositely disposed. For another example, when the housing 21 is a cylinder, the end cover 22 may also be in a circular plate shape, or a bottom wall of the end cover 22 is a circular groove structure, so that the end cover 22 covers the housing 21 to form a cylindrical battery cell 20.

In some embodiments, the end cover 22 is a wall of battery cell 20 with the largest area. For a polyhedral battery cell 20, the end cover 22 may be any one of the walls of the battery cell 20. For example, the end cover 22 may be set to include a wall of the battery cell 20 with the largest area. Correspondingly, an area of the opening 213 of the housing 21 is equal to an area of the wall of the battery cell 20 with the largest area, so that the opening 213 may reach the maximum value, thereby facilitating the processing and assembly of various components at the interior of the battery cell 20 through the opening 213 and increasing the assembly speed.

In some embodiments, the first wall 211 is a wall of the battery cell 20 other than the wall with the largest area. For a polyhedral battery cell 20, the first wall 211 may be any wall of the battery cell 20. Considering that the wall of the battery cell 20 with the largest area, during charging and discharging of the battery cell 20, has a larger deformation amount and generates more heat than other walls with smaller areas, therefore, the electrode terminal 23 is generally not disposed on the wall with the largest area, so as to avoid damage to the electrode terminal 23. For example, the electrode terminal 23 may be disposed on a wall of the battery cell 20 with the smallest area, that is, the first wall 211 may be a wall of the battery cell 20 other than the wall with the largest area. In addition, the first wall 211 is set as a wall of the battery cell 20 other than the wall with the largest area, and when the battery cell 20 is assembled into the battery 10, it is more convenient to arrange the plurality of battery cells 20, thereby improving the energy density of the battery 10.

Exemplarily, as shown in FIG. 3 and FIG. 4, the embodiment of the present application is described by using an example in which the end cover 22 is a wall of the battery cell 20 with the largest area, and the first wall 211 is not a wall of the battery cell 20 with the largest area.

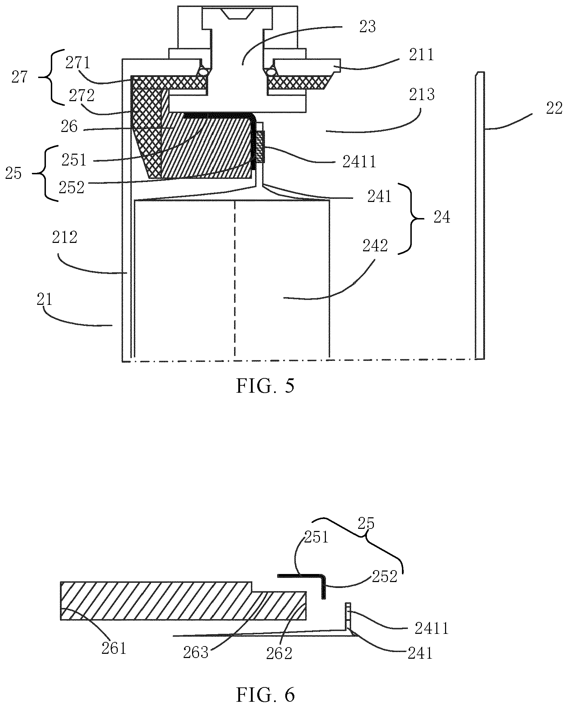

According to the embodiment of the present application, in the battery cell 20, the number of electrode assemblies 24 in the housing 21 may be set to one or more according to actual needs. For example, as shown in FIG. 3 and FIG. 4, two electrode assemblies 24 independent from each other are provided in the battery cell 20. For another example, FIG. 5 shows a schematic partial cross-sectional view of another battery cell 20 according to an embodiment of the present application, and the difference from FIG. 3 lies in that there is only one electrode assembly 24 in FIG. 5.

The electrode assembly 24 is a component a component in the battery cell 20, in which an electrochemical reaction occurs. The electrode assembly 24 may be a cylinder, a cuboid, or the like. If the electrode assembly 24 is a cylindrical structure, the housing 21 may also be a cylindrical structure; and if the electrode assembly 24 is a cuboid structure, the housing 21 may also be a cuboid structure. The electrode assembly 24 includes a tab 241 and a main body portion 242. The tab 241 of the electrode assembly 24 may include a positive tab and a negative tab. The positive tab may be formed by stacking portions of the positive electrode sheets not coated with the positive electrode active material layers, the negative tab may be formed by stacking portions of the negative electrode sheets not coated with the negative electrode active material layers, and the main body portion 242 may be formed by stacking or winding portions of the positive electrode sheets coated with the positive electrode active material layers and portions of the negative electrode sheets coated with the negative electrode active material layers.

For example, for the wound main body portion 242, the main body portion 242 may include a first electrode sheet and a second electrode sheet. The first electrode sheet and the second electrode sheet are wound around a winding axis. The winding axis may be set to be parallel to the end cover 22 or perpendicular to the end cover 22. For example, as shown in FIG. 3 to FIG. 5, dotted lines in the main body portion 242 in the figures represent the winding axis. Since the end cover 22 is a wall of the cuboid battery cell 20 with the largest area, the winding axis may be set to be parallel to the end cover 22. In addition, the tab 241 corresponding to the wound main body portion 242 generally extends along the winding axis, and the winding axis may also be set to be perpendicular to the first wall 211, so that the tab 241 is close to the first wall 211, and the electrical connection between the tab 241 and the electrode terminal 23 of the first wall 211 is implemented without bending the tab 241.

For the laminated main body portion 242, the main body portion 242 includes a plurality of first electrode sheets and a plurality of second electrode sheets, and the plurality of first electrode sheets and the plurality of second electrode sheets are alternately stacked in a certain direction. For example, for a cuboid battery cell 20, the plurality of first electrode sheets and the plurality of second electrode sheets may be alternately stacked in a direction perpendicular to a wall of the battery cell 20 with the largest area, that is, the stacking direction is perpendicular to the end cover 22 of the battery cell 20.

Alternatively, for another laminated main body portion 242, the main body portion 242 may include a first electrode sheet and a plurality of second electrode sheets. The first electrode sheet includes a plurality of laminated segments and a plurality of bent segments, each of the bent segments is used for connecting two adj acent laminated segments, and the plurality of second electrode sheets and the plurality of laminated segments are alternately stacked in a certain direction, for example, they may be alternately stacked in a direction perpendicular to a wall of the battery cell 20 with the largest area, that is, the stacking direction is perpendicular to the end cover 22 of the battery cell 20.

It should be understood that the above first electrode sheet and the second electrode sheet may be the portion of the positive electrode sheet coated with the positive active material layer and the portion of the negative electrode sheet coated with the negative active material layer, respectively.

In addition, when a plurality of electrode assemblies 24 are disposed at the interior of the battery cell 20, the main body portions 242 of the plurality of electrode assemblies 24 may be arranged stacked on each other, and correspondingly, the tabs 241 of the plurality of electrode assemblies 24 may also be arranged stacked on each other, and the stacking directions of the plurality of main body portions 242 are consistent, or the directions of the winding axes of the plurality of main body portions 242 are consistent. For example, as shown in FIG. 3 and FIG. 4, the interior of the battery cell 20 includes two electrode assemblies 24, and the directions of the winding axes of the main body portions 242 of the two electrode assemblies 24 are consistent. The two main body portions 242 are stacked in a direction perpendicular to the end cover 22, and the tabs 241 of the two electrode assemblies 24 may also be stacked in a direction perpendicular to the end cover 22. In this way, the positive tabs included in the plurality of electrode assemblies 24 may be electrically connected to the corresponding positive electrode terminals through the same connecting component 25, and the negative electrode tabs of the plurality of electrode assemblies 24 may also be electrically connected to the corresponding negative electrode terminals through the same connecting component 25. Thus, the assembly efficiency is improved, and the space utilization rate of the interior of the battery cell 20 is improved.

In some embodiments, the tab 241 is disposed on a side of the electrode assembly 24 close to the first wall 211. As shown in FIG. 3 to FIG. 5, the electrode terminal 23 is disposed on the first wall 211, and the tab 241 is electrically connected to the electrode terminal 23 through the connecting component 25. Therefore, the tab 241 may be disposed on a side of the electrode assembly 24 close to the first wall 211, so that the tab 24 1 does not need to be bent too much, thereby implementing an electrical connection between the tab 241 and the electrode terminal 23 on the first wall 211 through the connecting component 25. In addition, the tab 241 is disposed on a side of the main body portion 242 close to the first wall 211, and when the tab 241 is not bent, the tab 241 extends, toward the first wall 211, from a surface of the main body portion 242 close to the first wall 211, that is, the tab 241 extends in a direction perpendicular to the first wall 211.

In some embodiments, the first portion 251 and the second portion 252 are perpendicular to each other. The first portion 251 and the second portion 252 of the embodiment of the present application are relatively bent, that is, the first portion 251 and the second portion 252 intersect, and an included angle is formed between the first portion 251 and the second portion 252. The included angle is less than 180°, for example, the included angle may be set to be less than or equal to 90°. For another example, as shown in FIG. 3 and FIG. 4, the included angle may be set to be equal to 90°, that is, the first portion 251 is perpendicular to the second portion 252, to facilitate processing. Since the tab 241 extends in a direction perpendicular to the first wall 211, the first portion 251 is set to be perpendicular to the second portion 252, which can implement the electrical connection between the first portion 251 and the electrode terminal 23 and the electrical connection between the second portion 252 and the tab 241 without bending the tab 241.

In some embodiments, the first portion 251 is parallel to the first wall 211. As shown in FIG. 3 and FIG. 4, the electrode terminal 23 of the embodiment of the present application is disposed on the first wall 211, and a surface of the electrode terminal 23 facing the interior of the battery cell 20 is generally parallel to a surface of the first wall 211 facing the electrode assembly 24 at the interior of the battery cell 20. Correspondingly, the first portion 251 is set to be parallel to the first wall 211, that is, the first portion 251 is set to be parallel to the surface of the electrode terminal 23 facing the electrode assembly 24 at the interior of the battery cell 20, so as to implement an electrical connection between the first portion 251 and the electrode terminal 23.

In some embodiments, the second portion 252 is perpendicular to the first wall 211. As shown in FIG. 3 and FIG. 4, the first portion 251 is electrically connected to the electrode terminal 23 of the first wall 211, and the tab 241 extends in a direction perpendicular to the first wall 211, and therefore, the second portion 252 is set not to be perpendicular to the first wall 211. For example, the second portion 252 may also set to be perpendicular to the first wall 211, so that when the second portion 252 is electrically connected to the tab 241, the tab 241 may also be perpendicular to the first wall 211, and the tab 241 does not need to be bent to implement the electrical connection between the second part 252 and the tab 241.

In some embodiments, the second portion 252 is parallel to a bottom wall 212 of the housing 21. Specifically, the tab 241 is disposed between the second portion 252 and the opening 213 or the second portion 252 is disposed between the tab 241 and the opening 231. For example, as shown in FIG. 3 and FIG. 4, the bottom wall 212 is opposite to the opening 213, and the second portion 252 is disposed in parallel to the bottom wall 212 of the housing 21. That is, the second portion 252 is parallel to a plane where the opening 213 is located, so that the second portion 252 is electrically connected to the tab 241 through the opening 213.

It should be understood that the "electrical connection" in the embodiments of the present application may be implemented in various manners. For example, the electrical connection between the second portion 252 and the tab 241 is taken as an example, the electrical connection between the second portion 252 and the tab 241 may be implemented by means of welding, or may be implemented in other manners, and the embodiments of the present application are not limited thereto.

In some embodiments, the battery cell 20 further includes a support structure 26, and the support structure 26 may be configured to support the second portion 252, so as to implement the electrical connection between the second portion 252 and the tab 241. Considering that the electrode assembly 24 has a certain thickness in a direction perpendicular to the end cover 22, the tab 241 is generally located at a middle position of the electrode assembly 24. The portion connecting the second portion 252 and the tab 241 does not directly abut against the surface of the second wall 212 facing the electrode assembly 24, that is, there is generally a certain gap between the portion connecting the second portion 252 and the tab 241 and the second wall 212. Therefore, the support structure 26 is disposed in the gap to support the second portion 252, and thus the stability of the battery cell 20 is improved.

Specifically, a first end 261 of the support structure 26 abuts against a second wall 212 of the housing 21, the second wall 212 is connected with the first wall 211 and opposite to the opening 213, and a second end 262 of the support structure 26 abuts against the second portion 252. FIG. 6 shows a schematic diagram of an exploded structure of a support structure 26, a connecting component 25, and a tab 241 according to an embodiment of the present application. The support structure 26 in FIG. 6 may be the support structure 26 in FIG. 3 or FIG. 4.

As shown in FIG. 3 to FIG. 6, that a first end 261 of a support structure 26 abuts against a second wall 212 of a housing 21 may include that the first wall 261 of the support structure 26 directly comes into contact with an inner surface of the second wall 212. Alternatively, the first wall 261 of the support structure 26 may also indirectly abut against the inner surface of the second wall 212, that is, the support structure 26 may abut against the second wall 212 through another component disposed on the inner surface of the second wall 212. The embodiment of the present application is not limited thereto, where the inner surface of the second wall 212 is a surface of the second wall 212 facing the electrode assembly 24.

As shown in FIG. 3 to FIG. 6, that a second end 262 abuts against a second portion 252 may include that the second end 262 directly abuts against the second portion 252, or the second end 262 indirectly abuts against the second portion 252. For example, the second portion 252 may be disposed between the second end 262 and the tab 241, that is, the second end 262 directly abuts against the second portion 252. In this way, when the battery cell 20 is assembled, the support structure 26 may be first disposed in the battery cell 20, the second end 262 directly abuts against a surface of the second portion 252 facing the second wall 212, and then the electrode assembly 24 is disposed in the battery cell 20, so that the tab 241 is located on a surface of the second portion 252 facing the end cover 22 to implement the electrical connection between the tab 241 and the second portion 252 through the opening 213 under the support of the support structure 26, for example, the tab 241 is welded to the second portion 252. For another example, the tab 241 may also be disposed between the second end 261 and the tab 241, that is, the second end 262 indirectly abuts against the second portion 252. In this way, the battery cell 20 may be assembled in various ways. One way is that the support structure 26 is disposed in the battery cell 20, but the second end 262 does not directly abut against a surface of the second portion 252 facing the second wall 212. Instead, a gap is set between the second end 262 and the second portion 252, then the electrode assembly 24 is disposed in the battery cell 20, and the tab 241 is disposed in the gap between the second end 262 and the second portion 252, so that the second end 262 of the support structure 26 may abut against the tab 241, the electrical connection between the tab 241 and the second portion 252 is implemented under the support of the support structure 26. Alternatively, the battery cell 20 may be assembled in other ways. For example, the first portion 251 of the connecting component 25 is first set to be electrically connected to the electrode terminal 23, furthermore, the connecting component 25 may be first set such that an included angle between the first portion 251 and the second portion 252 is greater than 90°. For example, the included angle between the two parts may be set to be greater than 135°, or the first portion 251 and the second portion 252 are set to be located in the same plane, so that the support structure 26 is disposed in the battery cell 20, the first end 261 abuts against the second wall 212, and then the electrode assembly 24 is disposed in the battery cell 20, such that the second end 262 of the support structure 26 directly abuts against the surface of the tab 241 of the electrode assembly 24 facing the second wall 212. The second portion 252 is then bent to such an extent that it comes into contact with the tab 241, and in this way, the electrical connection between the tab 241 and the second portion 252 may be implemented under the support of the support structure 26.

Therefore, two ends of the support structure 26 respectively abut against the second wall 212 and the second portion 252, so that the second portion 252 may be supported, to implement the electrical connection between the second portion 252 and the tab 241, and the second portion 252 and the tab 241 may also be relatively fixed in a direction perpendicular to the end cover 22, thereby improving stability of the battery cell 20.

In some embodiments, the second end 262 abuts against a junction 2411 of the second portion 252 and the tab 241. As shown in FIG. 3 to FIG. 6, the second end 262 abuts against the junction 2411 of the second portion 252 and the tab 241, so that an area that the support structure 26 abuts against the second portion 252 is larger, the junction 2411 of the second portion 252 and the tab 241 can be supported more stably, so as to implement the electrical connection between the second portion 252 and the tab 241, and the stability of the battery cell 20 is better improved.

In some embodiments, at least part of a third end 263 of the support structure 26 abuts against the first portion 251, and the third end 263 is connected to the first end 261 and the second end 262. As shown in FIG. 3 to FIG. 6, the support structure 26 also includes a third end 263 located between the first end 261 and the second end 262 and configured to connect the first end 261 and the second end 262, and the third end 263 faces the first wall 211. Considering that the first portion 251 and the second portion 252 of the connecting component 25 are relatively bent, at least part of the third end 261 abuts against the first portion 251, that is, at least part of the support structure 26 is disposed in a bending region of the first portion 251 and the second portion 252, which may support the first portion 251, and the stability and strength of the connecting component 25 may be improved, so that first portion 251 and the second portion 252 are not prone to deformation.

In some embodiments, at least part of the third end 263 of the support structure 26 abuts against a junction of the first portion 251 and the electrode terminal 23. As shown in FIG. 3 to FIG. 6, considering that most region of the first portion 251 is electrically connected to the electrode terminal 23, at least part of the third end 263 of the support structure 26 abuts against the junction of the first portion 251 and the electrode terminal 23. An area that the support structure 26 abuts against the first portion 251 may be increased, and the first portion 251 can be supported more stably. Thus, the connecting component 25 may be more stably supported, and the first portion 251 and the second portion 252 are not prone to deformation.

In an embodiment of the present application, the battery cell 20 further includes an insulation component 27, and at least part of the insulation component 27 is located between the electrode terminal 23 and the first wall 211, so as to isolate the electrode terminal 23 from the first wall 211. As shown in FIG. 3 to FIG. 6, the insulation component 27 may include a first insulation portion 271. The first insulation portion 271 is disposed on a surface of the first wall 211 facing the electrode assembly 24, and at least part of the first insulation portion 271 is disposed between the electrode terminal 23 and the first wall 211, so as to isolate the electrode terminal 23 from the first wall 211 and prevent the electrode terminal 23 from being electrically connected to the first wall 211.

In some embodiments, the insulation component 27 includes a protrusion 272 extending toward the electrode assembly 24, and the first end 261 abuts against the second wall 212 through the protrusion 272. As shown in FIG. 3 to FIG. 6, the insulation component 27 may further include a protrusion 272 extending, toward the electrode assembly 24, from a surface of the first wall 211 facing the electrode assembly 24, that is, the protrusion 272 may be disposed on a surface of the second wall 212 facing the electrode assembly 24, and the first end 261 abuts against the second wall 212 through the protrusion 272. The setting of the protrusion 272 facilitates the assembly of other components in the battery cell 20. For example, the electrode assembly 24 needs to be wrapped with an insulating film so as to be insulated from the housing 21, and the protrusion 272 may facilitate fixing of the insulating film on the insulation component 27, so as to improve the stability of each component at the interior of the battery cell 20.

It should be understood that the support structure 26 and the insulation component 27 in the embodiment of the present application may be independent components, or integrally formed components. The support structure 26 and the insulation component 27 may be made of the same material or different materials, but the embodiment of the present application is not limited thereto.

In some embodiments, at least part of the support structure 26 is clamped between the electrode terminal 23 and the protrusion 272. As shown in FIG. 3 to FIG. 6, considering that a surface of the electrode terminal 23 of the battery cell 20 facing the electrode assembly 24 is generally closer to the electrode assembly 24 than a surface of the first wall 211 facing the electrode assembly 24, and then there is a certain gap between the electrode terminal 23 and the second wall 212 or between the electrode assembly 24 and the protrusion 272 on the surface of the second wall 212. In order to, for example, make the internal structure of the battery cell 20 more stable, part of the support structure 26 may be disposed between the electrode terminal 23 and the protrusion 272. That is, at least part of the support structure 26 is clamped between the electrode terminal 23 and the protrusion 272 to fill the space, thereby improving the stability of each component at the interior of the battery cell 20. Furthermore, since the electrode terminal 23 protrudes from the surface of the first wall 211, the third end 263 of the support structure 23 may be provided as a step structure, so that part of the third end 263 abuts against the first wall 211, and another part of the third end 253 abuts against the electrode terminal 23.

Comparing FIGS. 3-5 with FIG. 6, since distances between the electrode terminal 23 and the protrusion 272 may be different when the number of the electrode components 24 at the interior of the battery cell 20 is different, support structures 26 with different sizes may be provided according to the distance between the electrode terminal 23 and the protrusion 272, so as to fill the gap between the electrode terminal 23 and the protrusion 272.

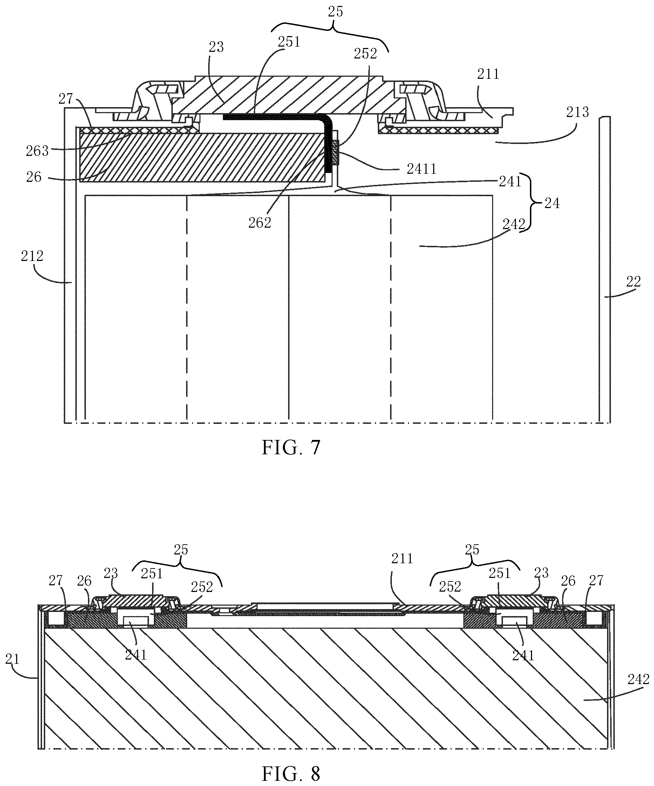

FIG. 7 shows a schematic partial cross-sectional view of another exploded structure of a battery cell 20 according to an embodiment of the present application. FIG. 8 shows schematic partial cross-sectional view of an assembled battery cell 20 corresponding to FIG. 7. The cross-sectional view of FIG. 7 is perpendicular to the cross-sectional view of FIG. 8, and the cross-sectional view of FIG. 8 is parallel to a wall of a battery cell 20 with the largest area. As shown in FIG. 7 and FIG.8, the difference over FIGS. 3 to 6 lies in that, in FIG. 7 and FIG.8, an electrode terminal 23 is recessed relative to a surface of a first wall 211 facing an electrode assembly 24 in a direction away from the electrode assembly 24, such that a junction between a first portion 251 and the electrode terminal 23 does not occupy the space of the interior of the battery cell 20, possibly improving the space utilization rate of the battery cell 20.

In addition, as shown in FIG. 7 and FIG. 8, it may also be set that the third end 263 of the support structure 26 does not abut against the first portion 251, and the third end 263 of the support structure 26 at least partly abuts against the first portion. For example, the third end 263 of the support structure 26 may abut against the first wall 211 through the insulation component 27, so as to improve the stability of the interior of the battery cell 20.

It should be understood that, the electrical connection of the electrode terminal 23 and the connecting component 25 in the embodiment of the present application may be implemented in various manners. For example, taking FIG. 3 to FIG. 8 as an example, the electrode terminal 23 may be electrically connected to the first portion 251 of the connecting component 25 by means of welding or the like, so as to implement the electrical connection between the electrode terminal 23 and the connecting component 25. Alternatively, the electrode terminal 23 and the connecting component 25 may also be set to be an integrally formed structure, so as to implement electrical connection of the two parts. In this way, processing is facilitated, and assembly efficiency of the battery cell 20 is improved.

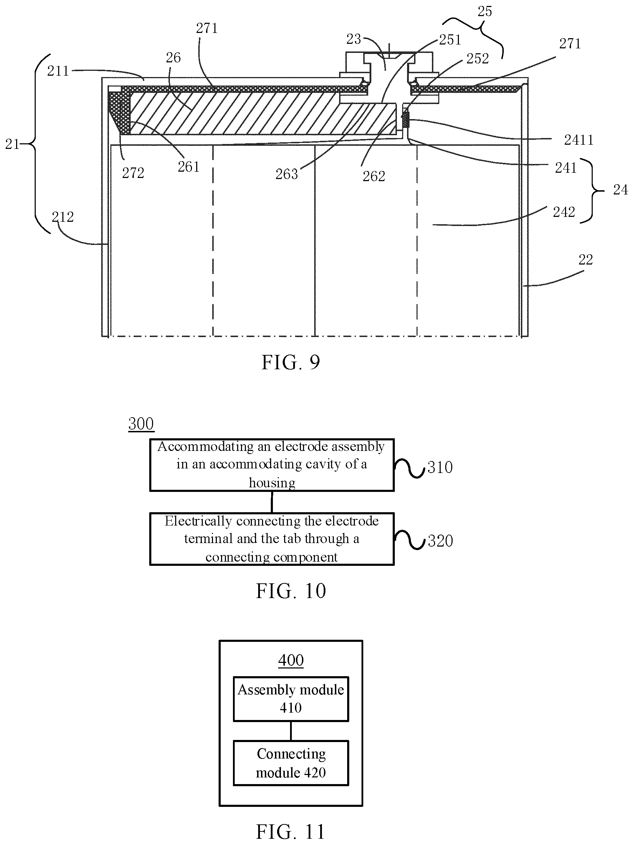

FIG. 9 shows a schematic partial cross-sectional view of another assembled battery cell 20 according to the embodiment of the present application. Comparing FIG. 9 and FIG. 4, it can be seen that the difference between them lies in that an electrode terminal 23 and a connecting component 25 in FIG. 9 are an integrated formed structure, and at this time, the surface of the electrode terminal 23 facing an electrode component 24 is provided with a second portion 252 protruding towards the electrode component 24, and the second portion 252 is configured to be electrically connected to the tab 241. Other areas on the surface of the electrode terminal 23 facing the electrode assembly 24 may be regarded as the first portion 251 of the connecting component 25, where other areas on the surface of the electrode terminal 23 facing the electrode assembly 24 are areas other than the second portion 252. The electrode terminal 23 and the connecting component 25 are set as an integrally formed structure, which can omit the connection step of the connecting component 25 and the electrode assembly 23, reduce the components at the interior of the battery cell 20, and further simplify the assembly process. It should be understood that the difference between FIG. 9 and FIG. 4 merely lies in that the electrode terminal 23 and the connecting component 25 in FIG. 9 are an integrally formed structure, while the electrode terminal 23 and the connecting component 25 in FIG. 4 are components independent of each other before being assembled; and therefore, other related descriptions in FIG. 4 are applicable to FIG. 9, which are not described herein again for brevity.

Therefore, the battery cell 20 of the embodiment of the present application is electrically connected to the electrode terminal 23 through the first portion 251 of the connecting component 25, and is electrically connected to the tab 241 of the electrode assembly 24 through the second portion 252. The first portion 251 and the second portion 252 are relatively bent, and the second portion 252 is located between the tab 241 and the opening 213 of the housing 21. In this way, the electrode assembly 24 and the connecting component 25 at the interior may be assembled in the housing 21 through the opening 213 of the housing 21, the electrical connection between the electrode terminal 23 on the first wall 211, the connecting component 25 and the tab 241 at the interior of the battery cell 20 may also be implemented at the opening 213, so that assembly of various components of the battery cell 20 may be completed in one process, and finally the packaging process of the battery cell 20 is completed only by covering the opening 213 of the housing 21, which simplifies the assembly process, improves assembly efficiency of the battery cell 20. Thus, the assembly efficiency of the battery 10 is improved.

The foregoing describes the battery cell 20, the battery 10, and the power consumption device in the embodiments of the present application. The following describes a method and a device for producing a battery cell 20 in an embodiment of the present application. For the part that is not described in detail, reference may be made to the foregoing embodiments.

FIG. 10 shows a schematic flowchart of a method 300 for producing a battery cell 20 according to an embodiment of the present application. As shown in FIG. 10, the method 300 may include: S310, accommodating an electrode assembly 24 in an accommodating cavity of a housing 21, where the housing 21 has an opening 213 at one end, the housing 21 has a first wall 211, and the first wall 211 is adjacent to the opening 213; an electrode terminal 23 is disposed on the first wall 211; and an electrode assembly 24 has a tab 241; and S320, electrically connecting the electrode terminal 23 and the tab 241 through a connecting component 25, where the connecting component 25 includes a first portion 251 and a second portion 252 that are relatively bent, the first portion 251 is configured to be electrically connected to the electrode terminal 23, the second portion 252 is configured to be electrically connected to the tab 241, and the tab 241 is located between the second portion 252 and the opening 213 or the second portion 252 is located between the tab 241 and the opening 213.

FIG. 11 is a schematic block diagram of a device 400 for producing a battery cell 20 according to an embodiment of the present application. As shown in FIG. 11, the device 400 may include: an assembly module 410, configured to an electrode assembly 24 in an accommodating cavity of a housing 21, where the housing 21 has an opening 213 at one end, the housing 21 has a first wall 211, and the first wall 211 is adjacent to the opening 213; an electrode terminal 23 is disposed on the first wall 211; and an electrode assembly 24 has a tab 241; and a connecting module 420, configured to electrically connect the electrode terminal 23 and the tab 241 through a connecting component 25, where the connecting component 25 includes a first portion 251 and a second portion 252 that are relatively bent, the first portion 251 is configured to be electrically connected to the electrode terminal 23, the second portion 252 is configured to be electrically connected to the tab 241, and the tab 241 is located between the second portion 252 and the opening 213 or the second portion 252 is located between the tab 241 and the opening 213.

Although the present application has been described with reference to the preferred embodiments, various improvements may be made to the present application and the components therein may be replaced with equivalents without departing from the scope of the present application. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A battery cell, comprising:
a housing (21), wherein the housing (21) has an accommodating cavity and an opening (213) at one end, the housing (21) has a first wall (211), and the first wall (211) is adjacent to the opening (213);
an electrode terminal (23), disposed on the first wall (211);
an electrode assembly (24), accommodated in the accommodating cavity and having a tab (241); and
a connecting component (25), wherein the connecting component (25) is configured to electrically connect the electrode terminal (23) and the tab (241), the connecting component (25) comprises a first portion (251) and a second portion (252) that are relatively bent, the first portion (251) is configured to be electrically connected to the electrode terminal (23), the second portion (252) is configured to be electrically connected to the tab (241), and the tab (241) is located between the second portion (252) and the opening (213) or the second portion (252) is located between the tab (241) and the opening (213).

2. The battery cell according to claim 1, wherein the first portion (251) and the second portion (252) are perpendicular to each other.

3. The battery cell according to claim 1 or 2, wherein the first portion (251) is parallel to the first wall (211); and/or
the second portion (252) is perpendicular to the first wall (211).

4. The battery cell according to any one of claims 1 to 3, wherein the tab (241) is disposed on a side of the electrode assembly (24) close to the first wall (211).

5. The battery cell according to any one of claims 1 to 4, wherein the battery cell further comprises:
a support structure (26), wherein a first end (261) of the support structure (26) abuts against a second wall (212) of the housing (21), and the second wall (212) is connected with the first wall (211) and opposite to the opening (213), and a second end (262) of the support structure (26) abuts against the second portion (252).

6. The battery cell according to claim 5, wherein the second end (262) abuts against a junction of the second portion (252) and the tab (241).

7. The battery cell according to claim 5 or 6, wherein at least part of a third end (263) of the support structure (26) abuts against the first portion (251), and the third end (263) is connected to the first end (261) and the second end (262).

8. The battery cell according to any one of claims 5 to 7, wherein the battery cell further comprises:
an insulation component (27), wherein at least part of the insulation component (27) is located between the electrode terminal (23) and the first wall (211), so as to isolate the electrode terminal (23) from the first wall (211).

9. The battery cell according to claim 8, wherein the insulation component (27) comprises a protrusion (272) extending toward the electrode assembly (24), and the first end (261) abuts against the second wall (212) through the protrusion (272).

10. The battery cell according to claim 8 or 9, wherein at least part of the support structure (26) is clamped between the electrode terminal (23) and the protrusion (272).

11. The battery cell according to any one of claims 1 to 10, wherein the battery cell further comprises:
an end cover (22), the end cover (22) being configured to cover the opening (213), and the end cover (22) being a wall of the battery cell with the largest area.

12. The battery cell according to any one of claims 1 to 11, wherein the first wall (211) is a wall of the battery cell other than the wall with the largest area.

13. The battery cell according to any one of claims 1 to 12, wherein the electrode terminal (23) and the connecting component (25) are an integrally formed structure.

14. A battery, comprising:
the battery cell according to any one of claims 1 to 13; and
a box, configured to accommodate a plurality of the battery cells.

15. A power consumption device, comprising: the battery cell according to any one of claims 1 to 13, the battery cell being configured to provide electric energy for the power consumption device.

16. A method for producing a battery cell, comprising:
accommodating an electrode assembly (24) in an accommodating cavity of a housing (21), wherein the housing (21) has an opening (213) at one end, the housing (21) has a first wall (211), and the first wall (211) is adjacent to the opening (213); an electrode terminal (23) is disposed on the first wall (211); and an electrode assembly (24) has a tab (241); and
electrically connecting the electrode terminal (23) and the tab (241) through a connecting component (25), wherein the connecting component (25) comprises a first portion (251) and a second portion (252) that are relatively bent, the first portion (251) is configured to be electrically connected to the electrode terminal (23), the second portion (252) is configured to be electrically connected to the tab (241), and the tab (241) is located between the second portion (252) and the opening (213) or the second portion (252) is located between the tab (241) and the opening (213).

17. A device for producing a battery cell, comprising:
an assembly module (410), configured to an electrode assembly (24) in an accommodating cavity of a housing (21), wherein the housing (21) has an opening (213) at one end, the housing (21) has a first wall (211), and the first wall (211) is adj acent to the opening (213); an electrode terminal (23) is disposed on the first wall (211); and an electrode assembly (24) has a tab (241); and
a connecting module (420), configured to electrically connect the electrode terminal (23) and the tab (241) through a connecting component (25), wherein the connecting component (25) comprises a first portion (251) and a second portion (252) that are relatively bent, the first portion (251) is configured to be electrically connected to the electrode terminal (23), the second portion (252) is configured to be electrically connected to the tab (241), and the tab (241) is located between the second portion (252) and the opening (213) or the second portion (252) is located between the tab (241) and the opening (213).
